# EUROPEAN PATENT APPLICATION

(11) **EP 4 564 565 A1**
(43) Date of publication of application: **04.06.2025**
(21) Application number: 23846152.9
(22) Date of filing: 04.07.2023
(51) Int. Cl.: H01M 50/35, H01M 50/213, H01M 50/291, H01M 50/342, H01M 50/503, H01M 50/505, H01M 50/512, H01M 50/209, H01M 50/211, H01M 50/50

(54) **BATTERY PACK**

(30) Priority: 28.07.2022 JP 2022120308
(71) Applicant: Panasonic Intellectual Property Management Co., Ltd., Kadoma-shi, Osaka 571-0057 (JP)
(72) Inventor: SAKAGAWA, Yasuaki, Kadoma-shi, Osaka 571-0057 (JP)
(74) Representative: Novagraaf International SA
(86) International application number: PCT/JP2023/024834
(87) International publication number: WO 2024/024419

(57) **Abstract**

The present invention includes: a battery on which a cap of a sealing assembly is provided on one side in a Z-axis direction as an external terminal; a first holder that holds an end on the one side in the Z-axis direction of each of a plurality of batteries aligned and includes an opening through which the cap is exposed; and a current collector that abuts one surface of the first holder at an abutment part and is connected to the cap exposed through the opening. The current collector protrudes on one side in a longitudinal direction beyond the abutment part, partially seals the opening, and is connected to the cap. A part of the current collector that partially seals the opening protrudes on the one side in the Z-axis direction beyond a surface of the first holder that is located on the one side in the Z-axis direction, to form a space between the abutment part, the part of the current collector that partially seals the opening, and the cap.

## Description

### Technical Field

The present disclosure relates to a battery pack in which a plurality of batteries are stored.

### Background Art

In a battery pack, a plurality of batteries are stored in an outer covering case so as to support a device to be used. In a battery pack, a plurality of aligned batteries are held on a holder and electrically connected by a current collector (for example, Patent Literature (PTL) 1).

If thermal runaway occurs in a battery stored in the battery pack due to an anomaly, a high-temperature internal gas exhausted from the battery undergoing thermal runaway may contact a battery held on the same holder (hereinafter, a nearby battery) and cause thermal runaway in the nearby battery, which is a chain reaction of thermal runaway. Therefore, the internal gas exhausted from the battery undergoing thermal runaway needs to be reliably exhausted to the outside of the holder without contacting the nearby battery.

### Citation List

### Patent Literature

PTL 1: Unexamined Japanese Patent Publication No. 2022-002199

### Summary of Invention

For a battery, a gas exhaust valve is provided on one side in the longitudinal direction. With this configuration, when thermal runaway occurs, the internal pressure of the battery increases, and the gas exhaust valve is actuated so that the internal gas is exhausted on one side in the longitudinal direction. Meanwhile, there are instances where an external terminal is provided on one side in the longitudinal direction of a battery. Therefore, an opening through which the external terminal is exposed is provided in a holder that holds an end of the battery that is located on one side in the longitudinal direction, and a collector lead of a current collector is connected to the external terminal exposed through the opening.

With the above-described configuration, when the internal gas of the battery is exhausted, the internal gas is exhausted through the opening of the holder. However, since the collector lead of the current collector partially covers the opening, there are instances where part of the exhaust gas is cut off by the collector lead. In recent years, wide collector leads have become more common because of increased battery size and output, and this tendency has become pronounced.

When the internal gas being exhausted is cut off by the collector lead, the exhaustion of the internal gas to the outside of the holder may be inhibited, and the high-temperature internal gas may flow into the holder and contact the nearby battery, resulting in thermal runaway of the nearby battery, which is a chain reaction of thermal runaway.

In view of the foregoing, an object of the present disclosure is to provide a battery pack capable of reliably exhausting, to the outside of a holder, a high-temperature internal gas exhausted from a battery when thermal runaway occurs in the battery.

A battery pack according to the present disclosure includes: a battery on which an external terminal is provided on one side in a longitudinal direction and from which an internal gas is exhausted on the one side in the longitudinal direction when an internal pressure increases; a holder that holds an end on the one side in the longitudinal direction of each of a plurality of the batteries aligned and includes an opening through which the external terminal is exposed; and a current collector including an abutment part that abuts one surface of the holder, the current collector partially covering the opening and being connected to the external terminal. The current collector protrudes on the one side in the longitudinal direction beyond the abutment part, partially covers the opening, and is connected to the external terminal, and a part of the current collector that partially covers the opening protrudes on the one side in the longitudinal direction beyond a surface of the holder that is located on the one side in the longitudinal direction, to form a space between the abutment part, the part of the current collector that partially covers the opening, and the external terminal.

With the battery pack according to the present disclosure, it is possible to reliably exhaust, to the outside of the holder, the high-temperature internal gas exhausted from the battery when thermal runaway occurs in the battery.

### Brief Description of Drawings

[Fig. 1] Fig. 1 is a perspective view illustrating a battery pack that is one example of an exemplary embodiment.
[Fig. 2] Fig. 2 is a cross-sectional view illustrating a battery pack that is one example of an exemplary embodiment.
[Fig. 3] Fig. 3 is a cross-sectional view illustrating a battery that is one example of an exemplary embodiment.
[Fig. 4] Fig. 4 is a perspective view illustrating a current collector that is one example of an exemplary embodiment.
[Fig. 5] Fig. 5 is a side view illustrating a current collector that is one example of an exemplary embodiment.
[Fig. 6] Fig. 6 is a side view illustrating a current collector that is another example of an exemplary embodiment.
[Fig. 7] Fig. 7 is a side view illustrating a current collector that is yet another example of an exemplary embodiment.
[Fig. 8] Fig. 8 is a side view illustrating a current collector that is yet another example of an exemplary embodiment.

### Description of Embodiments

Hereinafter, one example of an exemplary embodiment of the present disclosure will be described in detail. In the following description, specific shapes, materials, directions, numerical values, etc., are mere examples for facilitating understanding of the present invention and can be changed, as appropriate, according to application, purpose, specifications, etc.

### <Battery Pack>

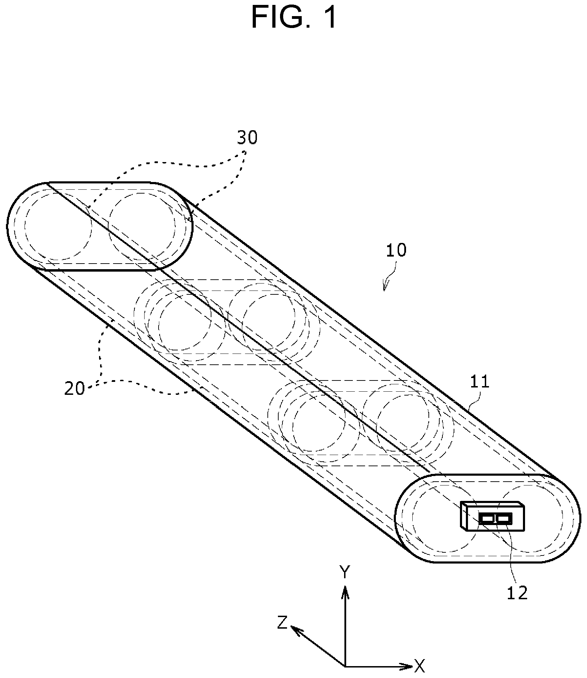

With reference to Fig. 1, battery pack 10, which is one example of the exemplary embodiment, will be described.

In battery pack 10, a plurality of battery blocks 20 are stored in outer covering case 11 so as to support a device to be used, and in each of the battery blocks 20, a plurality of batteries 30 (two batteries 30 in the example illustrated in Fig. 1) are fixed to each other on a holder and are stored in outer covering case 11. With battery pack 10, as will be described in greater detail below, when thermal runaway occurs in battery 30, the high-temperature internal gas exhausted from battery 30 can be reliably exhausted to the outside of the holder.

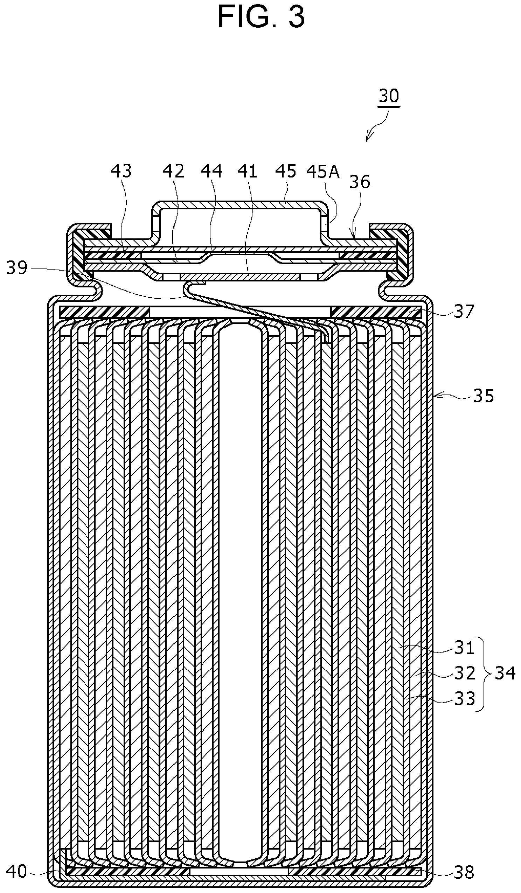

In the following description of each member, the longitudinal direction of battery 30 is denoted by a Z-axis direction, a direction that is perpendicular to the Z-axis direction and in which batteries 30 are arranged in battery block 20 is denoted by an X-axis direction, and a direction that is a perpendicular to the Z-axis and X-axis directions is denoted by a Y-axis direction. A side in the Z-axis direction on which cap 45 (refer to Fig. 3), which is a top plate of sealing assembly 36 (refer to Fig. 3) and serves as a positive terminal of battery 30, is provided will be referred to as one side, and the opposite side will be referred to as the other side.

Battery pack 10 is mainly used as a power supply for power usage. For example, battery pack 10 is used as a power supply for electric motor-driven devices such as an electric vehicle, an electric tool, an electric assisted bicycle, an electric motorcycle, an electric wheelchair, an electric tricycle, and an electric cart. Note that the use of battery pack 10 is not limited; for example, battery pack 10 may be used as a power supply for various electrical devices to be used inside and outside, other than the electric motor-driven devices, such as a cleaner, a radio, a lighting device, a digital camera, and a video camera.

Battery pack 10 includes: battery block 20 including a plurality of batteries 30 (two batteries 30 in the example illustrated in Fig. 1); and outer covering case 11 that stores a plurality of battery blocks 20.

Battery block 20 includes the plurality of batteries 30 aligned, which will be described in greater detail below. Battery pack 10, which includes the plurality of battery blocks 20 (three battery blocks 20 in the example illustrated in Fig. 1) connected in series, is configured to output a voltage corresponding to a device to be used. In battery block 20, the plurality of batteries 30 are connected in parallel. Battery block 20 will be described in greater detail below.

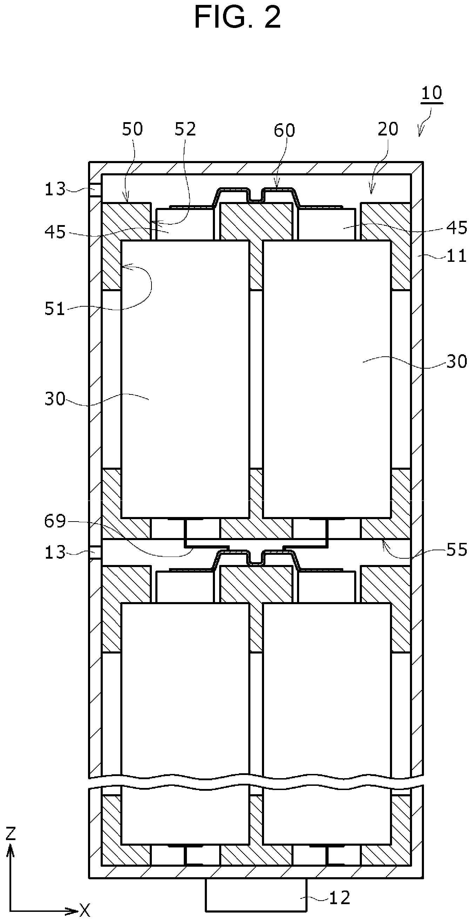

Outer covering case 11, which is made of metal such as aluminum, is formed into a cylindrical shape. Note that the material of outer covering case 11 is not limited to metal and may be resin. External pack terminal 12 electrically connected to battery block 20 is provided at an end of outer covering case 11 that is located on the other side in the Z-axis direction. External pack terminal 12 is used as a terminal that supplies a direct-current voltage when incorporated into a device on which battery pack 10 is mounted for use. Furthermore, external pack terminal 12 is also used to charge battery pack 10. In addition, exhaust hole 13 (refer to Fig. 2) through which the high-temperature internal gas exhausted from battery 30 undergoing thermal runaway is exhausted to the outside of battery pack 10 is provided in a side surface of outer covering case 11.

### <Battery Block>

With reference to Fig. 2, battery block 20, which is one example of the exemplary embodiment, will be described.

Battery block 20 includes: two batteries 30; first holder 50 as a holder that holds an end of each of two batteries 30 that is located on one side in the Z-axis direction; current collector 60 that abuts one surface of first holder 50 and is connected to cap 45 which is a top plate of sealing assembly 36 (refer to Fig. 3) and serves as an external positive terminal of battery 30, which will be described below; second holder 55 that holds an end of each of two batteries 30 that is located on the other side in the Z-axis direction; and collector lead 69 that is connected to a bottom of outer covering can 35 (refer to Fig. 3) serving as an external negative terminal of battery 30. Out of the plurality of battery blocks 20 connected in series in battery pack 10, battery block 20 located at the far end on one side in the Z-axis direction includes current collector 60 corresponding to a total positive terminal, and battery block 20 located at the far end on the other side in the Z-axis direction includes collector lead 69 corresponding to a total negative terminal and electrically connected to external pack terminal 12 (not illustrated in the drawings). Each of battery 30, first holder 50, and current collector 60 will be described in greater detail below.

### <Battery>

With reference to Fig. 2 and Fig. 3, battery 30, which is one example of the exemplary embodiment, will be described.

Battery 30, which is a cylindrical battery, is a lithium-ion battery. Note that battery 30 is not limited to the cylindrical battery and may be a prismatic battery, a laminated battery, or the like. Battery 30 may be an aqueous battery or may be a non-aqueous battery. A lithium-ion battery is preferably used as one example of the non-aqueous battery.

As illustrated in Fig. 3, in battery 30, cap 45 which is a top plate of sealing assembly 36 and serves as an external positive terminal is provided on one side in the Z-axis direction, and when the internal pressure increases during thermal runaway, the internal gas is exhausted through exhaust hole 45A of cap 45, as will be described in greater detail below. In other words, in battery 30, the internal gas is exhausted on one side in the Z-axis direction when the internal pressure increases.

Battery 30 includes: electrode assembly 34; an electrolyte (not illustrated in the drawings); and outer covering can 35 that stores electrode assembly 34 and the electrolyte. Electrode assembly 34, which includes positive electrode 31, negative electrode 32, and separator 33, has a wound structure in which positive electrode 31 and negative electrode 32 are wound in the form of a helix via separator 33. Outer covering can 35 is in the shape of a cylinder with a closed bottom that is open on one side in the Z-axis direction; the opening of outer covering can 35 is sealed by sealing assembly 36.

Battery 30 includes insulating plates 37, 38 disposed respectively on top of and below electrode assembly 34. In the example illustrated in Fig. 3, positive electrode lead 39 attached to positive electrode 31 extends to sealing assembly 36 through a through-hole of insulating plate 37, and negative electrode lead 40 attached to negative electrode 32 extends on the outside of insulating plate 38 to the bottom of outer covering can 35. Positive electrode lead 39 is connected to the lower surface of internal terminal plate 41, which is the bottom plate of sealing assembly 36, by welding or the like, and cap 45, which is the top plate of sealing assembly 36 and is electrically connected to internal terminal plate 41, serves as an external positive terminal. Negative electrode lead 40 is connected to the inner surface of the bottom of outer covering can 35 by welding or the like, and the bottom of outer covering can 35 serves as an external negative terminal.

Sealing assembly 36 is structured such that inner terminal plate 41, lower valve body 42, insulating member 43, upper valve body 44, and cap 45 are stacked in sequence from the electrode assembly 34. Each of the members included in sealing assembly 36 is in the shape of a disc or a ring, for example, and the members other than insulating member 43 are electrically connected to each other. Lower valve body 42 and upper valve body 44 which constitute a so-called gas exhaust valve are connected to each other at the middle of each of lower valve body 42 and upper valve body 44, and insulating member 43 is interposed between peripheral parts of lower valve body 42 and upper valve body 44.

In the gas exhaust valve, when the internal pressure increases during thermal runaway of battery 30, lower valve body 42 is deformed in such a way as to push upper valve body 44 toward cap 45, and then ruptures to cut off an electric current path between lower valve body 42 and upper valve body 44. When the internal pressure further increases, upper valve body 44 ruptures, and the internal gas is exhausted through exhaust hole 45A formed in a side surface of a protruding portion of cap 45. Note that the present exemplary embodiment is not limiting; the gas exhaust valve may be provided at the bottom of outer covering can 35 that is located on the other side in the Z-axis direction so that when the internal pressure increases, the internal gas is exhausted on the other side in the Z-axis direction.

### <Holder>

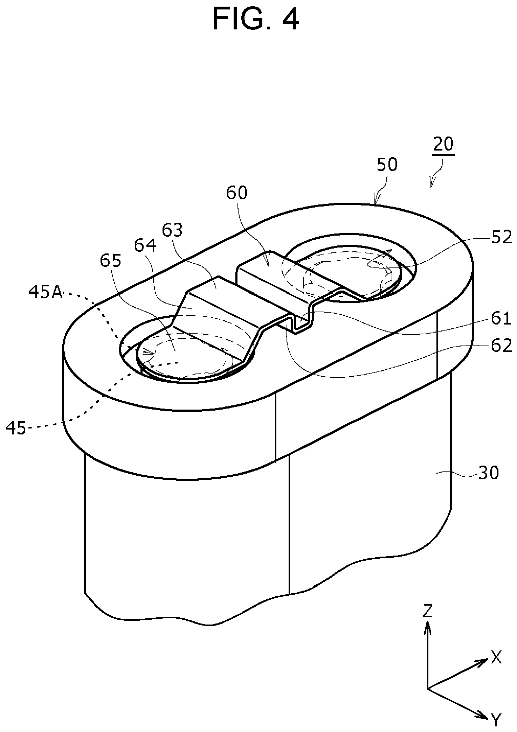

With reference to Fig. 2 and Fig. 4, first holder 50, which is one example of the exemplary embodiment, will be described.

First holder 50 holds an end of each of two batteries 30 that is located on one side in the Z-axis direction, as described above. Note that the number of batteries to be held on first holder 50 is not limited to that in the present exemplary embodiment.

First holder 50 may be formed of a high thermal conductive polyphenylene sulfide (PPS) resin, a resin containing a heat-dissipating filler, or a thermosetting resin that can be injection molded, for example. More specifically, first holder 50 may be formed of phenol resin, unsaturated polyester, unsaturated polyester mixed with an endothermic material, or the like. First holder 50 may be formed of an inorganic mineral such as mica or a material obtained by mixing an inorganic mineral such as mica into a resin material.

As illustrated in Fig. 4, first holder 50 is formed in the shape of an oval as viewed in the Z-axis direction and has a predetermined thickness in the Z-axis direction. First holder 50 includes: storage part 51 (refer to Fig. 2) that stores battery 30; and opening 52 through which cap 45 serving as the positive terminal of battery 30 is exposed.

As illustrated in Fig. 2, storage part 51 is formed on a surface of first holder 50 that is located on the other side in the Z-axis direction. Storage part 51 is formed to be circular as viewed on the other side in the Z-axis direction, in the shape of a recess as viewed in the X-axis or Y-axis direction. An end of battery 30 that is located on one side in the Z-axis direction fits into storage part 51, and thus the end of battery 30 on the one side is held.

As illustrated in Fig. 2 and Fig. 4, opening 52 is formed penetrating storage part 51. More specifically, opening 52 is formed as a circular hole having a diameter less than the diameter of circular storage part 51 as viewed on the other side in the Z-axis direction. Note that storage part 51 and opening 52 are formed having the same center. Through opening 52, cap 45, which is the top plate of sealing assembly 36 and serves as the positive terminal of battery 30, can be exposed, and cap 45 and current collector 60 can be connected. Furthermore, the high-temperature gas exhausted from battery 30 during thermal runaway of battery 30 can be exhausted to the outside of first holder 50 through opening 52.

### <Current Collector>

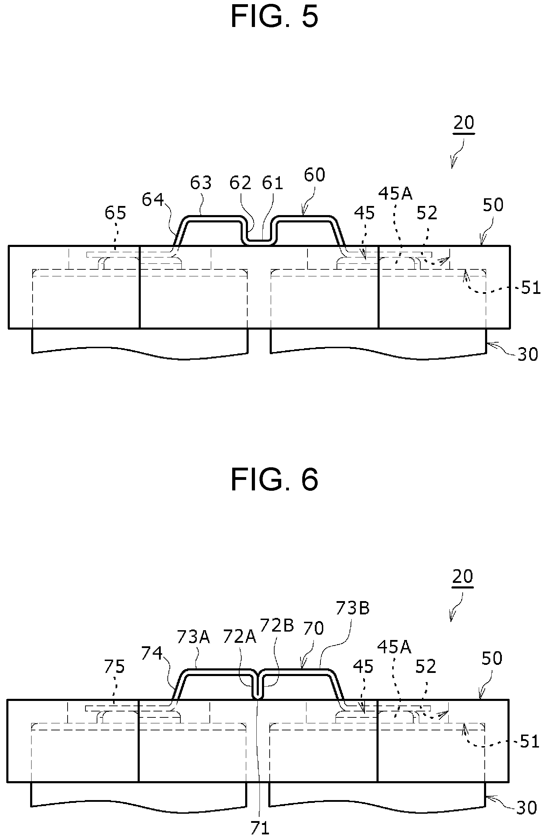

With reference to Fig. 4 and Fig. 5, current collector 60, which is one example of the exemplary embodiment, will be described.

Current collector 60 abuts, at abutment part 61, a surface of first holder 50 that is located on one side in the Z-axis direction, and is connected to cap 45 serving as the external positive terminal of battery 30. More specifically, current collector 60 connects caps 45 serving as the positive terminals of two batteries 30 held on first holder 50. Current collector 60 is formed of a metal sheet such as an aluminum sheet or a copper sheet, for example.

Up to joining part 65 connected to cap 45, which will be described below, in opening 52 of first holder 50, current collector 60 partially seals opening 52 on one side in the Z-axis direction. A part of current collector 60 that seals opening 52 on one side in the Z-axis direction is formed as top plate part 63 which protrudes on one side in the Z-axis direction beyond the surface of first holder 50 that is located on one side in the Z-axis direction. In other words, with top plate part 63 which protrudes on one side in the Z-axis direction beyond the surface of first holder 50 that is located on one side in the Z-axis direction, current collector 60 extends over an edge of cap 45 exposed through opening 52 of first holder 50.

With this configuration, a space is formed between abutment part 61, top plate part 63, and cap 45. As a result, the space formed by current collector 60 and the edge of cap 45 exposed through opening 52 of first holder 50 is larger than that formed by a conventional current collector that does not include top plate part 63 protruding on one side in the Z-axis direction.

Accordingly, the internal gas of battery 30 to be exhausted through opening 52 of first holder 50 can easily flow out of first holder 50 without contacting battery 30 held within first holder 50. Thus, it is possible to avoid a chain reaction of thermal runaway that is a situation where when thermal runaway occurs in one battery 30 in battery block 20, the high-temperature internal gas flows into first holder 50 and contacts another battery 30 within first holder 50, and thermal runaway occurs in another battery 30 within first holder 50.

More specifically, current collector 60 includes abutment part 61, rising part 62, top plate part 63, sloped part 64, and joining part 65, each of which will be described in greater detail below, in the order from the surface of first holder 50 that is located on one side in the Z-axis direction to cap 45 serving as a positive terminal. Note that sloped part 64 and joining part 65 generally correspond to a collector lead.

Abutment part 61 is a part that abuts a surface of first holder 50 that is located on one side in the Z-axis direction. Abutment part 61 is preferably disposed in the middle between two openings 52. Rising part 62 is a part extending on one side in the Z-axis direction from each of ends of abutment part 61 that are opposite in the X-axis direction.

Top plate part 63 is a part that extends from rising part 62 over the edge of opening 52 of first holder 50 and the edge of cap 45 exposed through opening 52. Sloped part 64 is a part that is sloped from top plate part 63 to joining part 65, which will be described below, and is connected thereto. Joining part 65 is a part electrically connected to a central portion of cap 45 by welding, for example.

Note that the present exemplary embodiment is not limiting; with a configuration in which a gas exhaust valve is provided at the bottom of outer covering can 35 that is located on the other side in the Z-axis direction so that when the internal pressure increases, the internal gas is exhausted on the other side in the Z-axis direction, collector lead 69 may be connected to outer covering can 35 by extending over the edge of an opening of second holder 55 and the edge of the bottom of outer covering can 35 which is exposed through the opening and serves as a negative terminal.

### <Conclusion>

Battery pack 10 according to the present exemplary embodiment includes: battery 30 on which cap 45 that is a top surface of sealing assembly 36 and serves as an external terminal is provided on one side in the Z-axis direction and from which an internal gas is exhausted on the one side in the Z-axis direction when an internal pressure increases; first holder 50 that holds an end on the one side in the Z-axis direction of each of a plurality of batteries 30 aligned and includes opening 52 through which cap 45 is exposed; and current collector 60 including abutment part 61 that abuts one surface of first holder 50 and being connected to cap 45 exposed through opening 52. Current collector 60 protrudes on the one side in the longitudinal direction beyond abutment part 61, partially seals opening 52, and is connected to cap 45, and top plate part 63 of current collector 60 that seals the edge of opening 52 protrudes on the one side in the longitudinal direction beyond a surface of first holder 50 that is located on the one side in the longitudinal direction, to form a space between abutment part 61, top plate part 63 of current collector 60 that seals the edge of opening 52, and cap 45.

With this configuration, the internal gas exhausted from battery 30 during thermal runaway of battery 30 can easily flow out of first holder 50 without being blocked by current collector 60. Thus, it is possible to avoid a chain reaction of thermal runaway that is a situation where when thermal runaway occurs in one battery 30 in battery block 20, the high-temperature internal gas flows into first holder 50 and contacts another battery 30 within first holder 50, and thermal runaway occurs in another battery 30 within first holder 50.

### <Another Exemplary Embodiment>

With reference to Fig. 6 to Fig. 8, current collectors 70, 80, 90, each of which is another example of the exemplary embodiment, will be described.

As illustrated in Fig. 6, current collector 70 includes abutment part 71, rising part 72, top plate part 73, sloped part 74, and joining part 75, each of which will be described in greater detail below, in the order from the surface of first holder 50 that is located on one side in the Z-axis direction to cap 45 serving as a positive terminal. Top plate part 73, sloped part 74, and joining part 75 are substantially the same as top plate part 63, sloped part 64, and joining part 65 of current collector 60 described above and therefore, description thereof will be omitted.

Abutment part 71 is a part that abuts a surface of first holder 50 that is located on one side in the Z-axis direction. Abutment part 71 is preferably disposed in the middle between two openings 52. Abutment part 71 is approximately as long as the thickness of two rising parts 72.

Rising part 72 is a part extending on one side in the Z-axis direction from each of ends of abutment part 71 that are opposite in the X-axis direction. One rising part 72A and the other rising part 72B are in abutment without spacing. Thus, since one top plate part 73A and the other top plate part 73B are electrically connected, the potential resistance can be set low as compared to current collector 60 described above, for example.

With this configuration, a space is formed between top plate part 73 and cap 45. Accordingly, the internal gas of battery 30 to be exhausted through opening 52 of first holder 50 can easily flow out of first holder 50 without contacting battery 30 held within first holder 50.

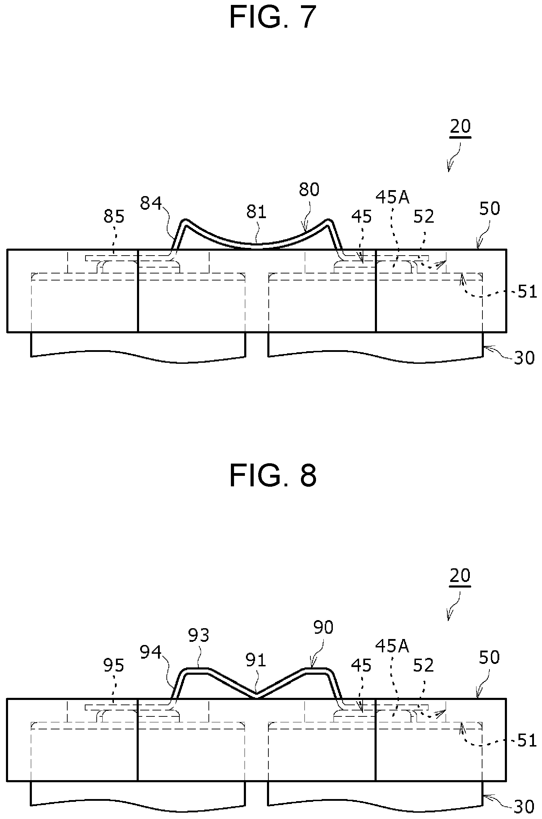

As illustrated in Fig. 7, current collector 80 includes curved part 81, sloped part 84, and joining part 85, each of which will be described in greater detail below, in the order from the surface of first holder 50 that is located on one side in the Z-axis direction to cap 45 serving as a positive terminal. Sloped part 84 and joining part 85 are substantially the same as sloped part 64 and joining part 65 of current collector 60 described above and therefore, description thereof will be omitted.

Curved part 81 bulges on the other side in the Z-axis direction. A portion of curved part 81 that is located at the middle in the X-axis direction abuts the surface of first holder 50 that is located on one side in the Z-axis direction. Ends of curved part 81 that are located on one side and the other side in the X-axis direction extend over the edge of opening 52 of first holder 50 and the edge of cap 45 exposed through opening 52 and are connected to sloped part 84.

With this configuration, a space is formed between curved part 81 and cap 45. Accordingly, the internal gas of battery 30 to be exhausted through opening 52 of first holder 50 can easily flow out of first holder 50 without contacting battery 30 held within first holder 50.

As illustrated in Fig. 8, current collector 90 includes bent part 91, top plate part 93, sloped part 94, and joining part 95, each of which will be described in greater detail below, in the order from the surface of first holder 50 that is located on one side in the Z-axis direction to cap 45 serving as a positive terminal. Top plate part 93, sloped part 94, and joining part 95 are substantially the same as top plate part 63, sloped part 64, and joining part 65 of current collector 60 described above and therefore, description thereof will be omitted.

Bent part 91 is bent so as to protrude on the other side in the Z-axis direction. A portion of bent part 91 that is located at the middle in the X-axis direction abuts the surface of first holder 50 that is located on one side in the Z-axis direction. Ends of bent part 91 that are located on one side and the other side in the X-axis direction extend over the edge of opening 52 of first holder 50 and the edge of cap 45 exposed through opening 52 and are connected to sloped part 94.

With this configuration, a space is formed between top plate part 93 and cap 45. Accordingly, the internal gas of battery 30 to be exhausted through opening 52 of first holder 50 can easily flow out of first holder 50 without contacting battery 30 held within first holder 50.

Note that the present disclosure is not limited to the exemplary embodiment and variations thereof described above; it goes without saying that various changes, improvements, etc., can be carried out within the scope of recitations in the claims in the present application.

### Reference Signs List

- 10: battery pack

- 11: outer covering case
- 12: external pack terminal
- 13: exhaust hole
- 20: battery block
- 30: battery
- 31: positive electrode
- 32: negative electrode
- 33: separator
- 34: electrode assembly
- 35: outer covering can
- 36: sealing assembly
- 37: insulating plate
- 38: insulating plate
- 39: positive electrode lead
- 40: negative electrode lead
- 41: internal terminal plate
- 42: lower valve body
- 43: insulating member
- 44: upper valve body
- 45: cap (external terminal)
- 45A: exhaust hole
- 50: first holder
- 51: storage part
- 52: opening
- 55: second holder
- 60: current collector
- 61: abutment part
- 62: rising part
- 63: top plate part
- 64: sloped part
- 65: joining part
- 69: collector lead
- 70: current collector
- 71: abutment part
- 72: rising part
- 73: top plate part
- 74: sloped part
- 75: joining part
- 80: current collector
- 81: curved part
- 84: sloped part
- 85: joining part
- 90: current collector
- 91: bent part
- 93: top plate part
- 94: sloped part
- 95: joining part

## Claims

1. A battery pack comprising:
a battery on which an external terminal is provided on one side in a longitudinal direction and from which an internal gas is exhausted on the one side in the longitudinal direction when an internal pressure increases;
a holder that holds an end on the one side in the longitudinal direction of each of a plurality of batteries aligned and includes an opening through which the external terminal is exposed, the plurality of the batteries including the battery; and
a current collector including an abutment part that abuts one surface of the holder, the current collector partially covering the opening and being connected to the external terminal, wherein
the current collector protrudes on the one side in the longitudinal direction beyond the abutment part, partially seals the opening, and is connected to the external terminal, and a part of the current collector that partially seals the opening protrudes on the one side in the longitudinal direction beyond a surface of the holder that is located on the one side in the longitudinal direction, to define a space between the abutment part, the part of the current collector that partially seals the opening, and the external terminal.

2. The battery pack according to claim 1, wherein
the holder holds two batteries each of which is the battery,
the current collector connects positive terminals of the two batteries and includes: one top plate part that partially seals one opening that is the opening; one rising part extending on the one side in the longitudinal direction from one surface of the holder and connected to the one top plate part; an other top plate part that partially seals an other opening that is the opening; and an other rising part extending on the one side in the longitudinal direction from the one surface of the holder and connected to the other top plate part, and
the one rising part and the other rising part are in abutment.

3. The battery pack according to claim 1, wherein
the holder holds two batteries each of which is the battery, and
the current collector further includes a curved part that bulges on an other side in the longitudinal direction and includes the abutment part in a middle between the two batteries aligned.

4. The battery pack according to claim 1, wherein
the holder holds two batteries each of which is the battery, and
the current collector further includes a bent part that is bent to protrude on an other side in the longitudinal direction and includes the abutment part in a middle between the two batteries aligned.
